# EUROPÄISCHE PATENTSCHRIFT

(11) **EP 2 797 461 B1**
(45) Veröffentlichungstag und Bekanntmachung des Hinweises auf die Patenterteilung: **06.06.2018**
(21) Anmeldenummer: 12820848.5
(22) Anmeldetag: 21.12.2012
(51) Int. Cl.: A47B 88/493

(54) **SYNCHRONISATIONSVORRICHTUNG FÜR EINE SCHUBLADE**
SYNCHRONISATION DEVICE FOR A DRAWER
DISPOSITIF DE SYNCHRONISATION POUR TIROIR

(30) Priorität: 27.12.2011 AT 18922011
(43) Veröffentlichungstag der Anmeldung: 05.11.2014
(73) Patentinhaber: Julius Blum GmbH, 6973 Höchst (AT)
(72) Erfinder: HAUER, Christian, 6912 Hörbranz (AT); IRGANG, Markus, 6844 Altach (AT)
(74) Vertreter: Torggler & Hofinger Patentanwälte
(86) Internationale Anmeldenummer: PCT/AT2012/000319
(87) Internationale Veröffentlichungsnummer: WO 2013/096982

(56) Entgegenhaltungen:
- EP-A1- 1 036 526
- WO-A1-2011/075753
- DE-A1- 3 834 688

## Beschreibung

Die Erfindung betrifft eine Synchronisationsvorrichtung zur Stabilisierung des Laufverhaltens einer Schublade in einem Möbelkorpus mit einer Synchronisationsstange, wobei die Synchronisationsstange eine Längsachse aufweist, und mit zwei Spurzahnrädern, die in zwei Zahnstangen einer Schienenausziehführung eingreifen, wobei eine Drehbewegung der beiden Spurzahnräder mit einer Drehbewegung der Synchronisationsstange gekoppelt ist.

Weiters betrifft die Erfindung eine Schublade mit einer Synchronisationsvorrichtung nach wenigstens einer der beschriebenen Ausführungsformen und ein Möbel mit wenigstens einer solchen Schublade.

Derartige Synchronisationsvorrichtungen sind bereits bekannt und werden beispielsweise in der WO 2011/075753, DE 3834688 A1, und in der EP 1036526 A1 gezeigt.

Aufgabe der Erfindung ist es, eine gegenüber dem Stand der Technik verbesserte Synchronisationsvorrichtung zur Stabilisierung des Lauferhaltens einer Schublade in einem Möbelkorpus anzugeben.

Diese Aufgabe wird durch eine Synchronisationsvorrichtung mit den Merkmalen des Anspruches 1 gelöst.

Dadurch, dass die Drehachsen aller Spurzahnräder einen Abstand zu der Längsachse der Synchronisationsstange aufweisen, kommt es zu einem örtlichen Versatz zwischen den Spurzahnrädern und der Synchronisationsstange.

Durch diesen Raumgewinn wird ermöglicht, dass hinter der Schublade etwa eine Ausstoßvorrichtung Platz finden kann, die die Schublade ausstoßen kann. Somit ist diese Synchronisationsvorrichtung sowohl für Schubladen geeignet, die mit einer Ausstoßvorrichtung angetrieben werden, als auch für Schubladen geeignet, die keine Ausstoßvorrichtung aufweisen, wo durch die Synchronisationsvorrichtung universell einsetzbar ist.

Weitere vorteilhafte Ausführungsformen der Erfindung sind in den abhängigen Ansprüchen definiert.

Gemäß einem bevorzugten Ausführungsbeispiel kann vorgesehen sein, dass die Drehachse der Synchronisationsstange in Montagelage der Synchronisationsvorrichtung näher zu einer Schubladenrückwand einer montierten Schublade hin ausgebildet ist als die Drehachsen der Spurzahnräder. Durch diese Maßnahme kann erzielt werden, dass die Schublade voll ausgezogen werden kann, ohne dass dabei die Spurzahnräder vorne (Bedienerseitig) ausspuren würden.

Günstigerweise ist die Drehachse der Synchronisationsstange in Montagelage der Synchronisationsvorrichtung und die Drehachsen der Spurzahnräder auf einer im Wesentlichen horizontalen Ebene angeordnet. Durch die Ausbildung auf einer im Wesentlichen horizontalen Ebene wird eine kompakte Bauform erzielbar.

Konkret wird auch Schutz begehrt für eine Schublade mit einer Synchronisationsvorrichtung zur Stabilisierung des Laufverhaltens der Schublade in einem Möbelkorpus nach wenigstens einer der beschriebenen Ausführungsformen.

Schutz wird auch begehrt für ein Möbel mit wenigstens einer Schublade mit einer Synchronisationsvorrichtung zur Stabilisierung des Laufverhaltens der Schublade in einem Möbelkorpus des Möbels nach wenigstens einer der beschriebenen Ausführungsformen.

Weitere Einzelheiten und Vorteile der vorliegenden Erfindung werden anhand der Figurenbeschreibung unter Bezugnahme auf die in der Zeichnung dargestellten Ausführungsbeispiele im Folgenden näher erläutert. Darin zeigen:
- Fig. 1: eine perspektivische Darstellung eines Möbels mit drei Schubladen,
- Fig. 2: eine Seitenansicht einer Schublade mit einer Schienenausziehführung und einer Ausstoßvorrichtung
- Fig. 3: eine perspektivische Rückunteransicht einer Schublade mit Schienenausziehführung und Ausstoßvorrichtung,
- Fig. 4: eine Detailansicht in perspektivischer Darstellung einer Synchronisationsvorrichtung an der Rückseite einer Schublade,
- Fig. 5a bis 5d: perspektivische Darstellungen einer Synchronisationsvorrichtung an einer Zahnstange,
- Fig. 6a und 6b: perspektivische Darstellungen einer Variante einer Synchronisationsvorrichtung an einer Zahnstange und
- Fig. 7a und 7b: perspektivische Darstellungen einer weiteren, nicht erfindungsgemäßen Variante einer Synchronisationsvorrichtung an einer Zahnstange.

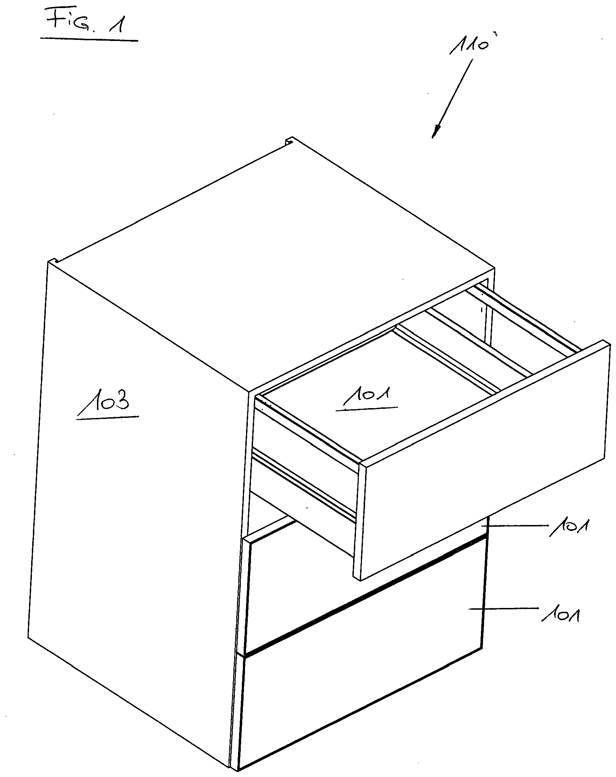

Figur 1 zeigt eine perspektivische Darstellung eines Möbels 110. Das Möbel 110 weist dabei einen Möbelkorpus 103 auf, in welchem drei Schubladen 101 ausgebildet sind.

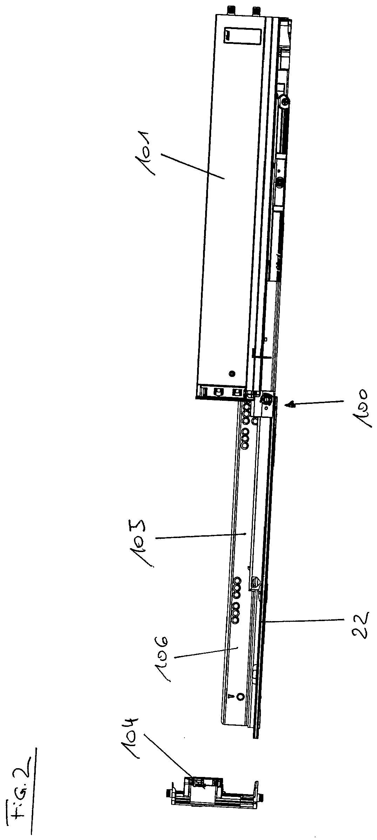

In diesem bevorzugten Ausführungsbeispiel weist das Möbel 110 eine Ausstoßvorrichtung 104 für die Schubladen 101 auf - wie dies aus der Figur 2 hervorgeht. Wenn die Ausstoßvorrichtung 104 die Schublade 101 ausstößt, so fährt diese Schublade 101 auf der Schienenausziehführung 105 aus dem Möbelkorpus 103 heraus. An der Rückseite der Schublade 101 ist dabei die Synchronisationsvorrichtung 100 zur Stabilisierung des Laufverhaltens der Schublade 101 in dem Möbelkorpus 103 ausgebildet.

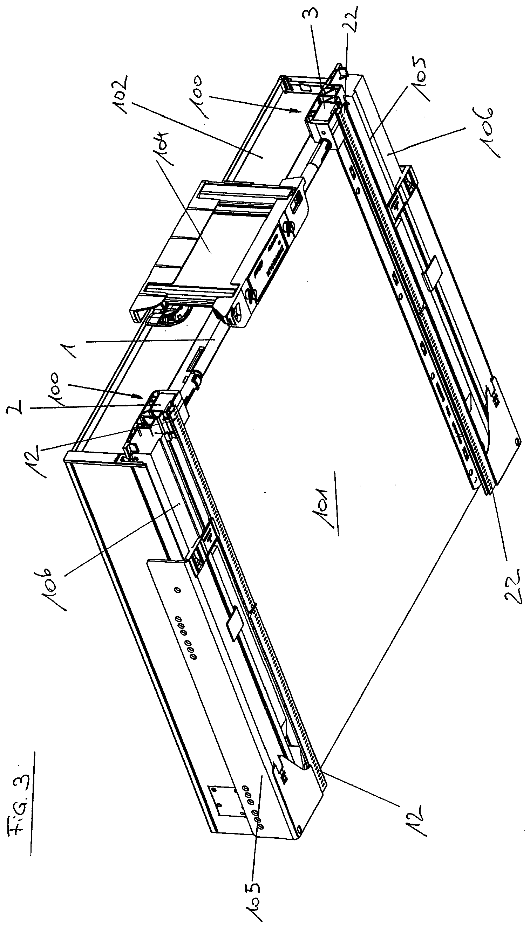

Figur 3 zeigt eine perspektivische Rückansicht einer Schublade 101 von unten. An der Rückseite 102 der Schublade 101 ist dabei einerseits die Synchronisationsvorrichtung 100 ausgebildet und andererseits befindet sich hier - wenn die Schublade 101 im hier nicht dargestellten Möbel 110 vollständig eingefahren ist - die Ausstoßvorrichtung 104, welche die Schublade 101 ausstoßen kann. Üblicherweise ist die Ausstoßvorrichtung 104 an einem hier nicht dargestellten Möbelkorpus 103 befestigt und verfährt nicht mit der Schublade 101. Es ist natürlich genauso vorstellbar die Ausstoßvorrichtung 104 an der Rückseite 102 der Schublade 101 zu befestigen und dadurch die Ausstoßvorrichtung 104 zusammen mit der Schublade 101 verfahren zu lassen.

Dabei ist besonders bevorzugt vorgesehen, dass die beiden Zahnstangen 11 und 12 mit den Korpusschienen 106 der Schienenausziehführung 105 in Verbindung stehen.

Wie in dieser Darstellung gut erkennbar ist, ist die Synchronisationsstange 1 in diesem bevorzugten Ausführungsbeispiel hinter der Schublade 101 ausgebildet und weiters ist die Synchronisationsstange 1 der Synchronisationsvorrichtung 100 an der Schubladenrückwand 102 der Schublade 101 ausgebildet.

Über den Ausstoßer 104 kann die Schublade 101 ausgestoßen werden. Dabei ist bevorzugt vorgesehen, dass die Synchronisationsstange 1 der Synchronisationsvorrichtung 100 zwischen der Schubladenrückwand 102 der Schublade 101 und der Ausstoßvorrichtung 104 ausgebildet ist.

Um das Laufverhalten der Schublade 101 zu stabilisieren, weisen die Schienenausziehführungen 105 jeweils eine Zahnstange 12 und 22 auf, in die zwei Spurzahnräder 11 und 21 (nicht dargestellt) eingreifen. Angetrieben werden die beiden Spurzahnräder 11 und 21 über die Synchronisationsstange 1, die quer entlang der Rückseite 102 der Schublade 101 verläuft.

In dieser Darstellung der Figur 3 sind die Spurzahnräder 11 und 21 nicht erkennbar, da sie sich unter den Abdeckungen 2 und 3 der Synchronisationsvorrichtung 100 befinden.

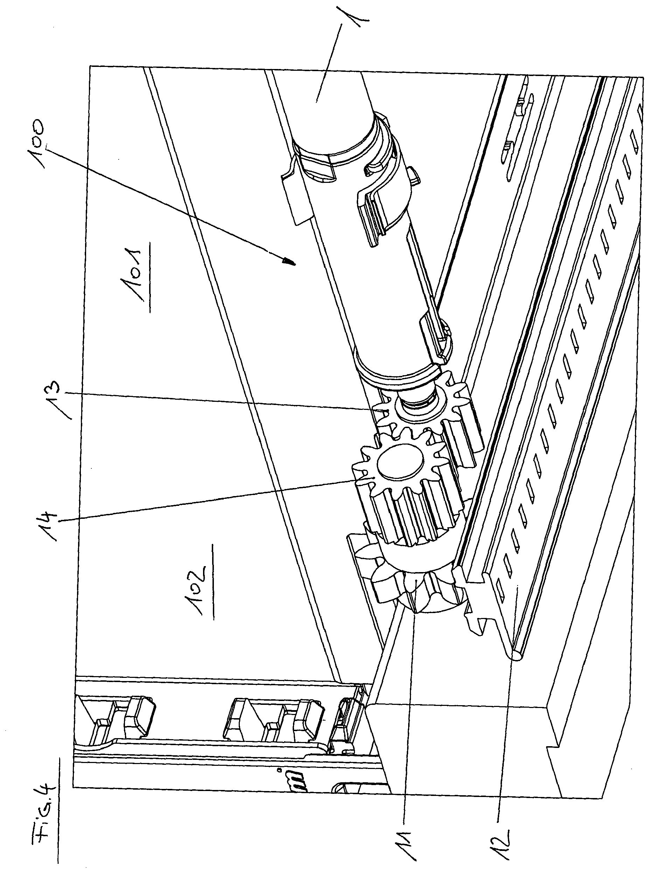

Figur 4 zeigt eine perspektivische Darstellung der Synchronisationsstange 1 der Synchronisationsvorrichtung 100 an der ein Synchronisationsstangenzahnrad 13 axial ausgebildet ist.

In dieser Darstellung ist gut erkennbar, dass das Spurzahnrad 11 versetzt zu dem Synchronisationsstangenzahnrad 13 und somit versetzt zu der Synchronisationsstange 1 ausgebildet ist.

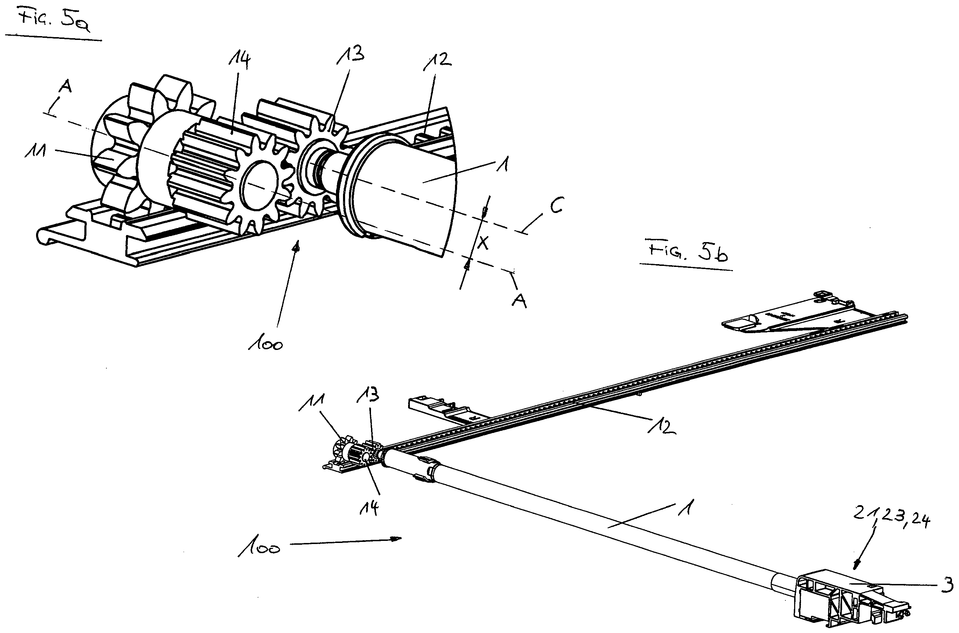

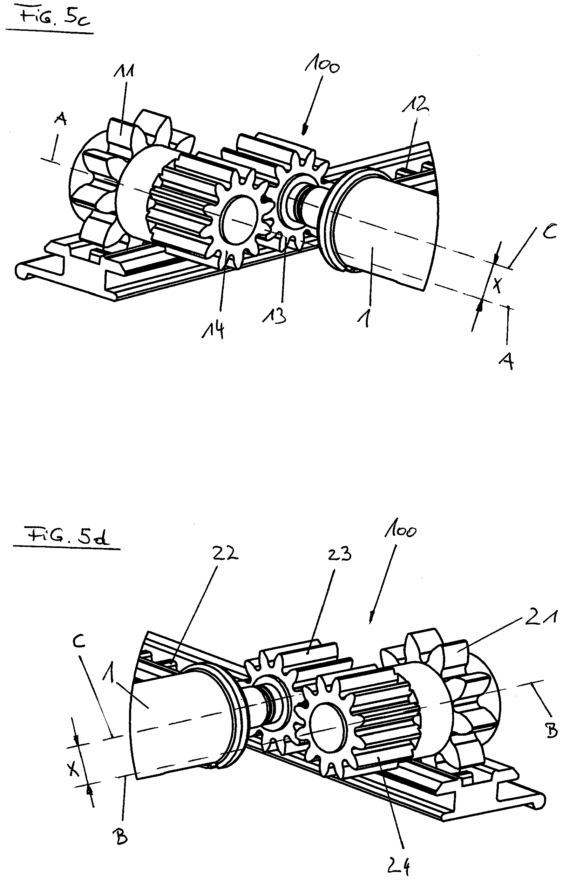

Figuren 5a bis 5d zeigen perspektivische Darstellungen beider Enden der Synchronisationsvorrichtung 100 zur Stabilisierung des Laufverhaltens einer hier nicht dargestellten Schublade 101 in einem hier nicht dargestellten Möbelkorpus 103. In diesen Darstellungen 5a bis 5d ist gut erkennbar, dass zwischen der Längsachse C der Synchronisationsstange 1 und den beiden Drehachsen A und B der Spurzahnräder 11 und 21 ein Abstand X ausgebildet ist. Durch diesen Abstand X kommt es zu einem Versatz der beiden Spurzahnräder 11 und 21 in deren korrespondierenden Zahnstangen 12 und 22 relativ zur Längsachse C der Synchronisationsstange 1.

Bei zum Stande der Technik gehörenden Synchronisationsvorrichtungen sind üblicherweise die Spurzahnräder selbst drehfest an der Synchronisationsstange befestigt und somit befinden sich die Drehachsen der Spurzahnräder auf der selben Achse - also der Längsachse C der Synchronisationsstange 1 - und weisen damit keinen Abstand zu dieser Längsachse C auf.

In diesem bevorzugten Ausführungsbeispiel wird dies durch ein Getriebezahnrad 14 bzw. 24 bewerkstelligt, welches mit einem drehfest an der Synchronisationsstange 1 ausgebildeten Synchronisationsstangenzahnrad 13 bzw. 23 korrespondiert.

In diesen Figuren 5a bis 5d ist weiters gut erkennbar, dass die Drehachse C der Synchronisationsstange 1 in Montagelage der Synchronisationsvorrichtung 100 und die Drehachsen A und B der Spurzahnräder 11 und 21 auf einer im Wesentlichen horizontalen Ebene angeordnet sind.

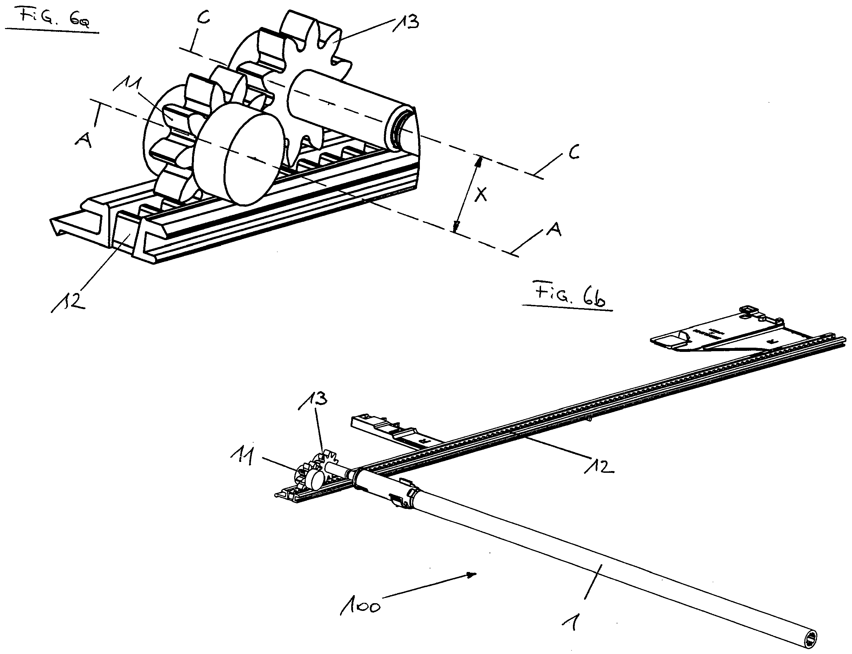

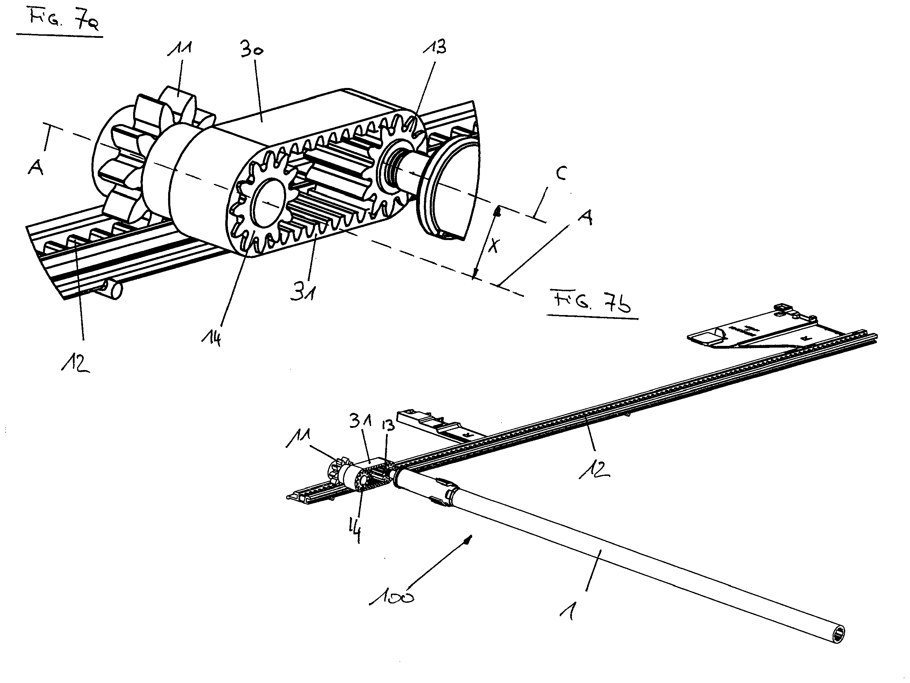

Dieser Versatz der Drehachsen A und B zu der Längsachse C der Synchronisationsstange 1 kann natürlich auch auf andere Art und Weise erzielt werden, wie dies etwa in den Figuren 6a und 6b bzw. 7a und 7b dargestellt ist.

Speziell in den Darstellungen 5c und 5d ist gut erkennbar, dass an der Synchronisationsvorrichtung 100 sowohl an ihrer linken als auch an ihrer rechten Seite jeweils nur ein Spurzahnrad 11 bzw. 21 ausgebildet ist.

Weiters ist auch hier gut erkennbar, dass in der Synchronisationsvorrichtung 100 sowohl an ihrer linken als auch an ihrer rechten Seite jeweils nur eine einzige Zahnstange 12 bzw. 22 ausgebildet ist.

Fig. 6a und 6b zeigen eine Variante einer Synchronisationsvorrichtung 100, bei der die Synchronisationsstangenzahnräder 13 und 23 (nur 13 dargestellt) in die Spurzahnräder 11 und 21 (nur 11 dargestellt) eingreifen. Durch diese direkte Kopplung der Synchronisationsstangenzahnräder 13 und 23 mit den Spurzahnrädern 11 und 21 kommt es zu einem Drehrichtungswechsel, d.h. dass sich die Synchronisationsstangenzahnräder 13 und 23 und somit die Synchronisationsstange 1 entgegen den Spurzahnrädern 11 und 21 dreht. Bezüglich dem Versatz der Drehachsen A und B der Spurzahnräder 11 und 21 zu der Längsachse C der Synchronisationsstange 1 gilt sinngemäß das unter der Figurenbeschreibung der Figuren 5a bis 5d Erwähnte.

Eine weitere Variante einer nicht erfindungsgemäßen Synchronisationsvorrichtung 100 ist in den Figuren 7a und 7b dargestellt, bei denen die Drehmomentübertragung von der Synchronisationsstange 1 zu den Spurzahnrädern 11 und 21 über einen Riementrieb 30 erfolgt. In diesem nicht erfindungsgemäßen Ausführungsbeispiel ist der Riementrieb 30 als Zahnriementrieb 31 ausgebildet. Ebenfalls wäre natürlich nicht im Rahmen der Erfindung vorstellbar, dass der Riementrieb 30 als Keilriementrieb oder ähnliches ausgebildet wäre. Bezüglich dem Versatz der Drehachsen A und B der Spurzahnräder 11 und 21 zu der Längsachse C der Synchronisationsstange 1 gilt sinngemäß das unter der Figurenbeschreibung der Figuren 5a bis 5d Erwähnte.
In allen hier dargestellten Ausführungsbeispielen kommt es zu einem Drehrichtungswechsel zwischen den Spurzahnrädern 11 und 21 und der Synchronisationsstange 1. Es wäre natürlich ebenso vorstellbar, dass die Drehrichtung nicht gewechselt wird, was auf einfache Art und Weise zu bewerkstelligen wäre, indem etwa ein zusätzliches Zahnrad eingesetzt wird.

## Patentansprüche

1. Synchronisationsvorrichtung (100) zur Stabilisierung des Laufverhaltens einer Schublade (101) in einem Möbelkorpus (103), mit
einer Synchronisationsstange (1), wobei die Synchronisationsstange (1) eine Längsachse (C) aufweist, und
zwei Spurzahnrädern (11, 21), die in zwei Zahnstangen (12, 22) einer Schienenausziehführung (105) eingreifen, wobei eine Drehbewegung der beiden Spurzahnräder (11, 21) mit einer Drehbewegung der Synchronisationsstange (1) gekoppelt ist,
**dadurch gekennzeichnet, dass** die Drehachsen (A, B) aller Spurzahnräder (11, 21) einen Abstand (X) zu der Längsachse (C) der Synchronisationsstange aufweisen, wobei an beiden Enden der Synchronisationsstange (1) jeweils ein drehfestes Synchronisationsstangenzahnrad (13, 23) aufgebildet ist, deren Drehbewegung mit der Drehbewegung der beiden Spurzahnräder (11, 21) gekoppelt ist, und **dadurch gekennzeichnet, dass** entweder
- die Synchronisationsstangenzahnräder (13, 23) in die Spurzahnräder (11, 21) eingreifen
oder
- zur Übertragung der Drehbewegung von den Synchronisationsstangenzahnrädern (13, 23) zu den Spurzahnrädern (11, 21) jeweils wenigstens ein gekoppeltes Getriebezahnrad (14, 24) ausgebildet ist und die Getriebezahnräder (14, 24) axial zu der Drehachse (A, B) der Spurzahnräder (11, 21) ausgebildet sind.

2. Synchronisationsvorrichtung nach Anspruch 1, **dadurch gekennzeichnet, dass** die Drehachse (C) der Synchronisationsstange (1) in Montagelage der Synchronisationsvorrichtung (100) näher zu einer Schubladenrückwand (102) einer montierten Schublade (101) hin ausgebildet ist als die Drehachsen (A, B) der Spurzahnräder (11,21).

3. Synchronisationsvorrichtung nach einem der Ansprüche 1 bis 2, **dadurch gekennzeichnet, dass** die Drehachse (C) der Synchronisationsstange (1) in Montagelage der Synchronisationsvorrichtung (100) und die Drehachsen (A, B) der Spurzahnräder (11, 21) auf einer im Wesentlichen horizontalen Ebene angeordnet sind.

4. Synchronisationsvorrichtung nach einem der Ansprüche 1 bis 3, **dadurch gekennzeichnet, dass** an der Synchronisationsvorrichtung (100) sowohl an ihrer linken Seite als auch an ihrer rechten Seite jeweils nur ein Spurzahnrad (11, 21) ausgebildet ist.

5. Synchronisationsvorrichtung nach einem der Ansprüche 1 bis 4, **dadurch gekennzeichnet, dass** an der Synchronisationsvorrichtung (100) sowohl an ihrer linken Seite als auch an ihrer rechten Seite jeweils nur eine Zahnstange (12, 22) ausgebildet ist.

6. Synchronisationsvorrichtung nach einem der Ansprüche 1 bis 5, **dadurch gekennzeichnet, dass** die beiden Zahnstangen (12, 22) mit Korpusschienen (106) der Schienenausziehführung (105) in Verbindung stehen.

7. Schublade (101) mit einer Synchronisationsvorrichtung (100) zur Stabilisierung des Laufverhaltens der Schublade (101) in einem Möbelkorpus (103) nach einem der Ansprüche 1 bis 6.

8. Schublade nach Anspruch 7, **dadurch gekennzeichnet, dass** die Synchronisationsstange (1) der Synchronisationsvorrichtung (100) hinter der Schublade (101) ausgebildet ist.

9. Schublade nach Anspruch 7 oder 8, **dadurch gekennzeichnet, dass** die Synchronisationsstange (1) der Synchronisationsvorrichtung (100) an der Schubladenrückwand (102) der Schublade (101) ausgebildet ist.

10. Möbel (110) mit wenigstens einer Schublade (101) nach Anspruch 7.

11. Möbel nach Anspruch 10, **dadurch gekennzeichnet, dass** das Möbel (110) eine Ausstoßvorrichtung (104) zum Ausstoßen der Schublade (101) aufweist.

12. Möbel nach Anspruch 11, **dadurch gekennzeichnet, dass** die Synchronisationsstange (1) der Synchronisationsvorrichtung (100) zwischen der Schubladenrückwand (102) der Schublade (101) und der Ausstoßvorrichtung (104) ausgebildet ist.

## Claims

1. A synchronization device (100) for stabilizing the movement behavior of a drawer (101) in a furniture carcass (103), with
a synchronization rod (1), wherein the synchronization rod (1) has a longitudinal axis (C), and
two spur gears (11, 21) engaging into two toothed racks (12, 22) of a drawer pull-out guide (105), wherein a pivoting movement of the two spur gears (11, 12) is coupled to a pivoting movement of the synchronization rod (1),
**characterized in that** the pivoting axes (A, B) of all spur gears (11, 21) have a spacing (X) in relation to the longitudinal axis (C) of the synchronization rod (1), wherein on each of the two ends of the synchronization rod (1), a synchronization rack gear (13, 23) is formed in a torque-proof manner, the pivoting movement of which is coupled to a pivoting movement of the two spur gears (11, 12), and **characterized in that**
either
- the synchronization rack gears (13, 23) engage into the spur gears (11, 21)
or
- for transmitting a pivoting movement from the synchronization rack gears (13, 23) to the spur gears (11, 21), at least one coupled transmission gear wheel (14, 24) is provided on each side, and that the transmission gear wheels (14, 24) are formed axially in relation to the pivoting axes (A, B) of the spur gears (11,21).

2. The synchronization device according to claim 1, **characterized in that** the pivoting axis (C) of the synchronization rod (1), in the mounting position of the synchronization device (100), is arranged closer to a drawer rear wall (102) of a mounted drawer (101) than the pivoting axes (A, B) of the spur gears (11, 21).

3. The synchronization device according to one of the claims 1 to 2, **characterized in that** in the mounting position of the synchronization device (100), the pivoting axis (C) of the synchronization rod (1) and the pivoting axes (A, B) of the spur gears (11, 21) are arranged substantially in a horizontal plane.

4. The synchronization device according to one of the claims 1 to 3, **characterized in that** arranged on the synchronization device (100), on its left side as well as on its right side, only one spur gear (11, 21) is provided.

5. The synchronization device according to one of the claims 1 to 4, **characterized in that** arranged on the synchronization device (100), on its left side as well as on its right side, only one toothed rack (12, 22) is provided.

6. The synchronization device according to one of the claims 1 to 5, **characterized in that** the two toothed racks (12, 22) are connected to carcass rails (106) of the drawer pull-out guide (105).

7. A drawer (101) having a synchronization device (100) for stabilizing the movement behavior of the drawer (101) in a furniture carcass (103) according to one of the claims 1 to 6.

8. The drawer according to claim 7, **characterized in that** the synchronization rod (1) of the synchronization device (100) is arranged behind the drawer (101).

9. The drawer according to claim 7 or 8, **characterized in that** the synchronization rod (1) of the synchronization device (100) is arranged on the drawer rear wall (102) of the drawer (101).

10. An item of furniture (110) with at least one drawer (101) according to claim 7.

11. The item of furniture according to claim 10, **characterized in that** the item of furniture (110) has an ejection device (104) for ejecting the drawer (101).

12. The item of furniture according to claim 11, **characterized in that** the synchronization rod (1) of the synchronization device (100) is arranged between the drawer rear wall (102) of the drawer (101) and the ejection device (104).

## Revendications

1. Dispositif de synchronisation (100) pour la stabilisation du comportement de fonctionnement d'un tiroir (101) dans un corps de meuble (103), avec une barre de synchronisation (1), dans lequel la barre de synchronisation (1) présente un axe longitudinal (C), et deux roues dentées de guidage (11, 21), qui engrènent dans deux crémaillères (12, 22) d'une glissière de guidage de rails (105), dans lequel un mouvement de rotation des deux roues dentées de guidage (11, 21) est couplé à un mouvement de rotation de la barre de synchronisation (1), **caractérisé en ce que** les axes de rotation (A, B) de toutes les roues dentées de guidage (11, 21) présentent un écartement (X) par rapport à l'axe longitudinal (C) de la barre de synchronisation, dans lequel aux deux extrémités de la barre de synchronisation (1) est conçu à chaque fois une roue dentée de barre de synchronisation en rotation (13, 23), dont le mouvement de rotation est couplé au mouvement de rotation des deux roues dentées de guidage (11, 21), et **caractérisé en ce que** soit
- les roues dentées de barre de synchronisation (13, 23) engrènent dans les roues dentées de guidage (11, 21)
soit
- pour la transmission du mouvement de rotation des roues dentées de barre de synchronisation (13, 23) aux roues de guidage (11, 21) est conçue à chaque fois au moins une roue dentée de transmission couplée (14, 24) et les roues dentées de transmission (14, 24) sont conçues axialement à l'axe de rotation (A, B) des roues dentées de guidage (11, 21).

2. Dispositif de synchronisation selon la revendication 1, **caractérisé en ce que** l'axe de rotation (C) de la barre de synchronisation (1) est conçu, en position de montage du dispositif de synchronisation (100), plus près d'une paroi arrière de tiroir (102) d'un tiroir monté (101) que les axes de rotation (A, B) des roues dentées de guidage (11, 21).

3. Dispositif de synchronisation selon l'une des revendications 1 à 2, **caractérisé en ce que** l'axe de rotation (C) de la barre de synchronisation (1) en position de montage du dispositif de synchronisation (100) et les axes de rotation (A, B) des roues dentées de guidage (11, 21) sont disposés sur un plan essentiellement horizontal.

4. Dispositif de synchronisation selon l'une des revendications 1 à 3, **caractérisé en ce que** sur le dispositif de synchronisation (100), aussi bien sur son côté gauche que sur son côté droit, est conçue à chaque fois uniquement une roue dentée de guidage (11, 21).

5. Dispositif de synchronisation selon l'une des revendications 1 à 4, **caractérisé en ce que** sur le dispositif de synchronisation (100), aussi bien sur son côté gauche que sur son côté droit, est conçue à chaque fois uniquement une crémaillère (12, 22).

6. Dispositif de synchronisation selon l'une des revendications 1 à 5, **caractérisé en ce que** les deux crémaillères (12, 22) sont en liaison avec des rails de corps (106) de la glissière de guidage de rail (105).

7. Tiroir avec un dispositif de synchronisation (100) pour la stabilisation du comportement de fonctionnement du tiroir (101) dans un corps de meuble (103) selon l'une des revendications 1 à 6.

8. Tiroir selon la revendication 7, **caractérisé en ce que** la barre de synchronisation (1) du dispositif de synchronisation (100) est conçue derrière le tiroir (101).

9. Tiroir selon la revendication 7 ou 8, **caractérisé en ce que** la barre de synchronisation (1) du dispositif de synchronisation (100) est conçue sur la paroi arrière de tiroir (102) du tiroir (101).

10. Meuble (110) avec au moins un tiroir (101) selon la revendication 7.

11. Meuble selon la revendication 10, **caractérisé en ce que** le meuble (110) présente un dispositif d'éjection (104) pour éjecter le tiroir (101).

12. Meuble selon la revendication 11, **caractérisé en ce que** la barre de synchronisation (1) du dispositif de synchronisation (100) est conçue entre la paroi arrière de tiroir (102) du tiroir (101) et le dispositif d'éjection (104).
